# EUROPÄISCHE PATENTSCHRIFT

(11) **EP 3 478 526 B1**
(45) Veröffentlichungstag und Bekanntmachung des Hinweises auf die Patenterteilung: **13.01.2021**
(21) Anmeldenummer: 17742642.6
(22) Anmeldetag: 04.07.2017
(51) Int. Cl.: B60K 13/04, B62D 21/11, B62D 21/17, B60K 13/06

(54) **BEFESTIGUNGSRAHMEN ZUR BEFESTIGUNG EINES ANTRIEBSAGGREGATS AN EINEM AUFBAU EINES FAHRZEUGS**
FASTENING FRAME FOR FASTENING A DRIVE UNIT TO A BODY OF A VEHICLE
SYSTÈME DE FIXATION DU GROUPE MOTOPROPULSEUR SUR UNE CARROSSERIE DE VÉHICULE

(30) Priorität: 04.07.2016 DE 102016212068
(43) Veröffentlichungstag der Anmeldung: 08.05.2019
(73) Patentinhaber: Ford Global Technologies, LLC, Dearborn, MI 48126 (US)
(72) Erfinder: GROSCH, Hans Günter, 52391 Vettweiß (DE); HOBEIN, Bert, 52076 Aachen (DE); LÖFFLER, Rolf Lorenz, 41569 Rommerskirchen (DE); STEINKOPF, Thomas W., 50859 Köln (DE); LACH, Rainer, 52146 Würselen (DE)
(74) Vertreter: Dörfler, Thomas
(86) Internationale Anmeldenummer: PCT/DE2017/100557
(87) Internationale Veröffentlichungsnummer: WO 2018/006906

(56) Entgegenhaltungen:
- DE-A1- 10 029 389
- DE-A1-102012 214 633
- US-A- 3 163 251
- US-A- 3 763 950
- US-A1- 2014 196 972

## Beschreibung

Die vorliegende Erfindung betrifft einen Befestigungsrahmen nach dem Oberbegriff des Anspruchs 1.

Gewöhnlich weist ein Fahrzeug verschiedene Rahmenstrukturen zum Tragen unterschiedlicher Fahrzeugsysteme, zum Beispiel Fahrzeugaufbau, Antriebsstrang, Antriebsaggregat und dergleichen, auf.

Insbesondere bei modernen Fahrzeugkonzepten, wie beispielsweise Hybridfahrzeugen oder Brennstoffzellenfahrzeugen, bei denen zusätzliche Komponenten, wie zum Beispiel Elektromotor, Batterie, Brennstoffzelle, Wasserstofftank und dergleichen, am Fahrzeug befestigt werden müssen, stellt sich das allgemeine Problem des eng begrenzten Bauraums am Fahrzeug in besonderem Maße, nicht zuletzt auch dadurch, dass der den Fahrzeuginsassen zur Verfügung stehende Fahrgastraum trotz Anbringung zusätzlicher Komponenten nach Möglichkeit nicht verkleinert werden soll.

Gattungsgemäße Befestigungsrahmen sind beispielsweise jeweils in den Druckschriften US 3 763 950 A, US 3 163 251 A, US 2014/0196972 A1 sowie DE 10 2012 214 633 A1 beschrieben, bei denen ein Abgas erzeugendes Antriebsaggregat eines Kraftfahrzeugs von einem Rahmenrohr getragen ist, dessen eines Ende fluidleitend mit einem Abgasauslass des Antriebsaggregats verbunden ist. Das Abgas wird durch das Rahmenrohr weg von dem Antriebsaggregat geleitet.

Bei einem Brennstoffzellenfahrzeug ist eine Brennstoffzelle, die auch als Brennstoffzellenstack oder -stapel bezeichnet wird, installiert, die als Antriebsaggregat bzw. Antriebskraftquelle verwendet wird.

Ein Brennstoffzellenfahrzeug mit einer Brennstoffzelle und einer daran angeschlossenen Abgasvorrichtung ist beispielsweise in der DE 10 2009 031 312 B4 beschrieben.

Aus der US 8 820 451 B2 ist des Weiteren ein Brennstoffzellenfahrzeug bekannt, das einen luftgekühlten Brennstoffzellenstapel mit einem Lufteinlass und einem Luftauslass aufweist.

Vor diesem Hintergrund liegt der vorliegenden Erfindung die Aufgabe zugrunde, einen hinsichtlich einer Bauraum- und Gewichtseinsparung verbesserten Befestigungsrahmen zur Befestigung eines Antriebsaggregats an einem Fahrzeugaufbau zu schaffen.

Diese Aufgabe wird durch einen Befestigungsrahmen mit den Merkmalen des Anspruchs 1 gelöst. Weitere, besonders vorteilhafte Ausgestaltungen der Erfindung offenbaren die Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß wird ein Befestigungsrahmen zur Befestigung eines ein Abgas erzeugenden Antriebsaggregats an einem Aufbau eines Fahrzeugs bereitgestellt, der ein das Antriebsaggregat tragendes Rahmenrohr aufweist. Als Rohr ist hierbei in an sich bekannter Weise ein länglicher Hohlkörper zu verstehen, dessen Länge wesentlich größer ist als sein Durchmesser. Das Rahmenrohr kann einen kreisrunden Querschnitt aufweisen, der eine optimale Bauform darstellt. Das Rahmenrohr kann jedoch zur Erhöhung der Steifigkeit auch einen rechteckigen, ovalen oder anderen Querschnitt aufweisen. Erfindungsgemäß ist das Rahmenrohr einenends fluidleitend mit einem Abgasauslass des Antriebsaggregats verbunden und dazu eingerichtet, das Abgas durch das Rahmenrohr weg von dem Antriebsaggregat zu leiten.

Somit erfüllt der erfindungsgemäße Befestigungsrahmen in einem einzigen Bauteil gleichzeitig zwei Funktionen, nämlich das Antriebsaggregat zu tragen und das von dem Antriebsaggregat erzeugte Abgas abzuleiten. Der herkömmlich für eine Abgasanlage am Fahrzeug bereitgestellte Bauraum, beispielsweise ein an einem Fahrzeugboden ausgebildeter, in dessen Längsrichtung sich erstreckender Mitteltunnel, kann somit zur Unterbringung anderer Fahrzeugkomponenten verwendet werden, zum Beispiel eines Wasserstofftanks bei einem Brennstoffzellenfahrzeug und/oder einer Batterie.

Des Weiteren lässt sich durch den erfindungsgemäßen Befestigungsrahmen das Gewicht des Fahrzeugs verringern, da die herkömmlich aus zwei Fahrzeugkomponenten bestehenden Befestigungsrahmen und Abgasanlage nun in einer Komponente integriert sind. Eine Gewichtsreduzierung führt wiederum zu einer erhöhten Fahrleistung des Fahrzeugs und zu einer größer erzielbaren Reichweite.

Gemäß der Erfindung umgibt das Rahmenrohr das Antriebsaggregat wenigstens einmal vollumfänglich. Mit anderen Worten umschlingt das Rahmenrohr das Antriebsaggregat im Wesentlichen in einem Winkel von wenigstens 360 °. Hierdurch lässt sich eine mechanisch stabile Halterung für das Antriebsaggregat am Fahrzeugaufbau realisieren. Außerdem lässt sich hierdurch eine gewisse, für die Ableitung des Abgases vorteilhafte Länge des Rahmenrohrs bauraumsparend erzielen.

Des Weiteren sieht die Erfindung zur weiteren Erhöhung der mechanischen Steifigkeit des Befestigungsrahmens vor, dass der das Antriebsaggregat vollumfänglich umgebende Teil des Rahmenrohrs in einer Ebene liegt, so dass ein Startpunkt des Umfangs und ein Endpunkt des Umfangs zusammenfallen und der den Umfang beginnende Teil des Rahmenrohrs an dieser Stelle mit dem den Umfang endenden Teil des Rahmenrohrs verbunden ist. Bevorzugt sind die beiden Rohrteile stoffschlüssig miteinander verbunden, beispielsweise verschweißt oder verklebt. Sie können jedoch auch mittels anderer bekannter Verbindungstechniken, zum Beispiel mittels Schrauben, Nieten und dergleichen, miteinander verbunden sein.

Gemäß einer vorteilhaften Ausgestaltung der Erfindung ist in dem Rahmenrohr wenigstens ein von dem Abgas durchströmter Schalldämpfer integriert, mit dem eine Geräuschentwicklung in dem Rahmenrohr reduziert werden kann.

Des Weiteren können an dem Rahmenrohr drei Rahmenbefestigungslager zur Befestigung des Rahmenrohrs am Fahrzeugaufbau vorgesehen sein. Dies ermöglicht eine statisch bestimmte Lagerung des Befestigungsrahmens am Fahrzeugaufbau. Selbstverständlich können am Rahmenrohr aber auch weniger oder mehr als drei Rahmenbefestigungslager bereitgestellt sein.

Ferner kann an dem Rahmenrohr wenigstens ein Aggregatbefestigungslager zur Befestigung des Antriebsaggregats am Rahmenrohr vorgesehen sein. Bevorzugt sind zwei Aggregatbefestigungslager am Rahmenrohr vorgesehen, um das Antriebsaggregat sicher mit dem Befestigungsrahmen am Fahrzeugaufbau befestigen zu können.

Bevorzugt ist das Antriebsaggregat eine Brennstoffzelle bzw. ein Brennstoffzellenstapel, zum Beispiel eine Wasserstoff-Brennstoffzelle. In dieser Ausgestaltung kann in dem Rohrrahmen ferner wenigstens ein Sensor zur Überwachung der darin geführten Wasserstoffkonzentration vorgesehen sein.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: eine Draufsicht auf ein erstes Ausführungsbeispiel eines Befestigungsrahmens gemäß der Erfindung,
- Fig. 2: eine perspektivische Ansicht eines zweiten Ausführungsbeispiels eines Befestigungsrahmens gemäß der Erfindung,
- Fig. 3: eine Seitenansicht des Befestigungsrahmens aus Fig. 2, und
- Fig. 4: eine Draufsicht auf den Befestigungsrahmen aus Fig. 2.

In den unterschiedlichen Figuren sind hinsichtlich ihrer Funktion gleichwertige Teile stets mit denselben Bezugszeichen versehen, so dass diese in der Regel auch nur einmal beschrieben werden.

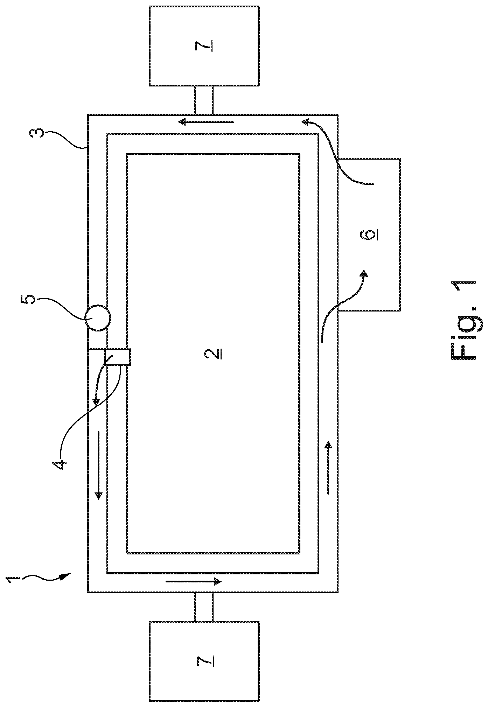

Fig. 1 stellt eine schematische Draufsicht auf ein erstes Ausführungsbeispiel eines Befestigungsrahmens 1 gemäß der Erfindung zur Befestigung eines Antriebsaggregats 2 an einem Aufbau eines Fahrzeugs (nicht dargestellt) dar. Bei dem hier gezeigten Ausführungsbeispiel ist das Antriebsaggregat 2 eine ein Abgas erzeugende Brennstoffzelle, insbesondere eine Wasserstoff-Brennstoffzelle. Der Befestigungsrahmen 1 umfasst ein Rahmenrohr 3, das die Brennstoffzelle 2 bei dem dargestellten Ausführungsbeispiel des Befestigungsrahmens 1 einmal vollumfänglich, das heißt im Wesentlichen um 360 °, umgibt und diese trägt.

Das Rahmenrohr 3 ist einenends mit einem Abgasauslass 4 der Brennstoffzelle 2 fluidleitend verbunden, so dass das Abgas der Brennstoffzelle 2 von dem Rahmenrohr 3 entsprechend der in Fig. 1 eingezeichneten Strömungspfeile von dem Abgasauslass 4 der Brennstoffzelle 2 zu einem Abgasauslass 5 des Rahmenrohrs 3 geführt und damit weg von der Brennstoffzelle 2 geführt wird.

Des Weiteren ist Fig. 1 zu entnehmen, dass zwischen dem Abgasauslass 4 der Brennstoffzelle 2 und dem Abgasauslass 5 des Rahmenrohrs 3 ein Schalldämpfer 6 zur Reduzierung einer Geräuschentwicklung integriert ist, der von dem Abgas durchströmt wird.

Darüber hinaus weist der in Fig. 1 gezeigte Befestigungsrahmen 1 drei an dem Rahmenrohr 3 angebundene Rahmenbefestigungslager 7 zur Befestigung des Rahmenrohrs 3 am Fahrzeugaufbau auf, von denen in der Draufsicht allerdings nur zwei zu sehen sind.

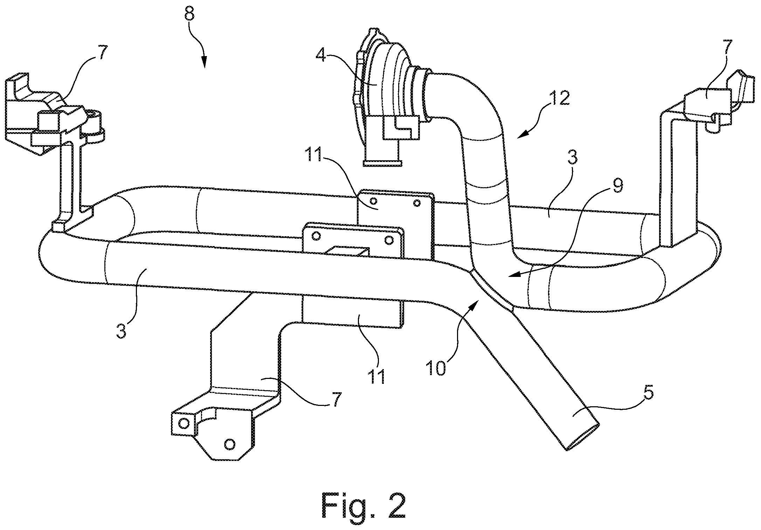

Fig. 2 stellt eine perspektivische Ansicht eines zweiten Ausführungsbeispiels eines Befestigungsrahmens 8 gemäß der Erfindung dar. In dem Rahmenrohr 3 des Befestigungsrahmens 8 ist bei dem hier gezeigten Ausführungsbeispiel kein Schalldämpfer integriert.

Fig. 2 ist zu entnehmen, dass der Querschnitt des Rahmenrohrs 3 des gezeigten Ausführungsbeispiels im Wesentlichen kreisförmig ausgebildet ist.

In Fig. 2 ist weiter zu erkennen, dass der Abgasauslass 4 des Antriebsaggregats 2 (dargestellt in Fig. 5) ein Turboladerauslass ist. Ferner sind in Fig. 2 die drei mit dem Rahmenrohr 3 verbundenen Rahmenbefestigungslager 7 zu erkennen, von denen in Fig. 2 ein linkes, ein rechtes und ein unteres Befestigungslager 7 am Rahmenrohr 3 vorgesehen sind. Hierdurch ist der Befestigungsrahmen 8 statisch eindeutig am Fahrzeugaufbau (nicht dargestellt) bestimmt. Das in Fig. 2 untere der drei Befestigungslager 7 wird auch als Drehmomentstütze bezeichnet.

Wie ferner in Fig. 2 zu erkennen ist, liegt der das Antriebsaggregat 2 vollumfänglich, das heißt um 360 °, umgebende Teil des Rahmenrohrs 3 in einer Ebene. Mit anderen Worten fallen ein Startpunkt 9 des von dem Rahmenrohr 3 gebildeten Umfangs und ein Endpunkt 10 des von dem Rahmenrohr 3 gebildeten Umfangs im Wesentlichen zusammen. Der den Umfang beginnende Teil des Rahmenrohrs 3 am Startpunkt 9 ist mit dem den Umfang endenden Teil des Rahmenrohrs 3 am Endpunkt 10 verbunden. Bevorzugt sind die beiden Rohrteile stoffschlüssig miteinander verbunden, beispielsweise verschweißt oder verklebt. Sie können jedoch auch mittels anderer bekannter Verbindungstechniken, zum Beispiel mittels Schrauben, Nieten und dergleichen, miteinander verbunden sein.

Fig. 2 sind weiterhin zwei Aggregatbefestigungslager 11 zur Befestigung des Antriebsaggregats 2 am Rahmenrohr 3 zu entnehmen, die mit dem Rahmenrohr 3 verbunden sind.

Bei dem in Fig. 2 dargestellten Ausführungsbeispiel des Befestigungsrahmens 8 ist ein zwischen dem Abgasauslass 4 des Antriebsaggregats 2 und dem Startpunkt 9 des Rahmenrohrs 3 angeordnetes Rohrzwischenstück 12 flexibel ausgebildet, um den Befestigungsrahmen 8 besser an den Abgasauslass 4 des Antriebsaggregats 2 anpassen zu können. Alle übrigen Teile des Rahmenrohrs 3 sind im Wesentlichen steif ausgebildet.

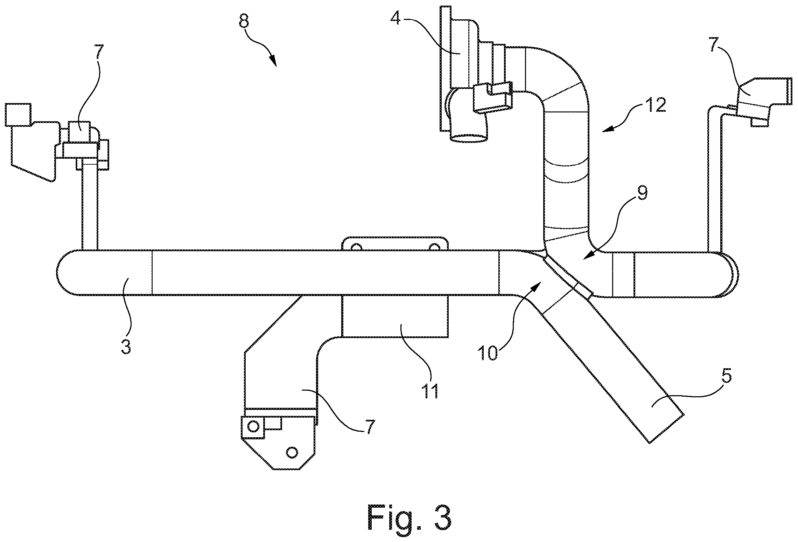

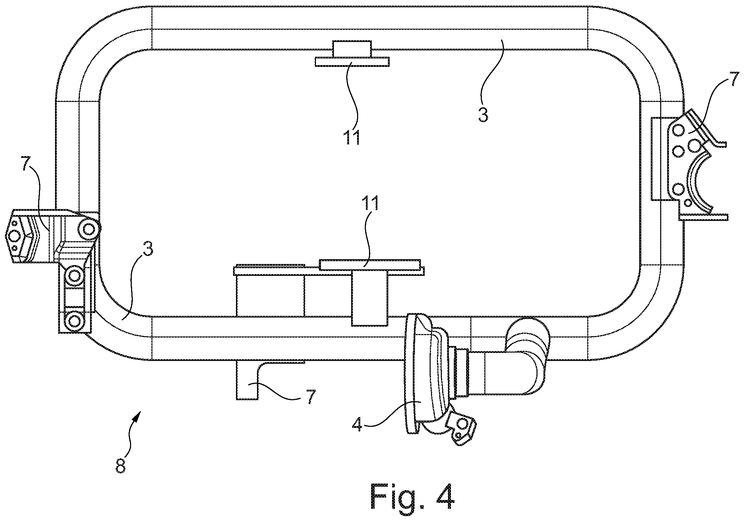

Fig. 3 stellt eine Seitenansicht des Befestigungsrahmens 8 aus Fig. 2 dar und Fig. 4 stellt eine Draufsicht auf den Befestigungsrahmen 8 aus Fig. 2 dar.

Der erfindungsgemäße Befestigungsrahmen wurde anhand von in den Figuren dargestellten Ausführungsbeispielen näher erläutert. Der Befestigungsrahmen ist jedoch nicht auf die hierin beschriebene Ausführungsform beschränkt, sondern umfasst auch gleich wirkende weitere Ausführungsformen. So kann der Querschnitt des Rahmenrohrs beispielsweise auch rechteckig oder oval ausgebildet sein, um dem Befestigungsrahmen eine noch höhere Steifigkeit zu verleihen.

In bevorzugter Ausführung wird der erfindungsgemäße Befestigungsrahmen zur Befestigung eines ein Abgas erzeugenden Antriebsaggregats, bevorzugt eine (Wasserstoff-)Brennstoffzelle, an einem Fahrzeugaufbau verwendet.

### Bezugszeichenliste

- 1: Befestigungsrahmen
- 2: Antriebsaggregat
- 3: Rahmenrohr
- 4: Abgasauslass von 2
- 5: Abgasauslass von 3
- 6: Schalldämpfer
- 7: Rahmenbefestigungslager
- 8: Befestigungsrahmen
- 9: Startpunkt
- 10: Endpunkt
- 11: Aggregatbefestigungslager
- 12: Flexibles Rohrzwischenstück

## Patentansprüche

1. Befestigungsrahmen zur Befestigung eines ein Abgas erzeugenden Antriebsaggregats (2) an einem Aufbau eines Fahrzeugs, wobei ein das Antriebsaggregat (2) tragendes Rahmenrohr (3), das einenends fluidleitend mit einem Abgasauslass (4) des Antriebsaggregats (2) verbunden und dazu eingerichtet ist, das Abgas durch das Rahmenrohr (3) weg von dem Antriebsaggregat (2) zu leiten,
**dadurch gekennzeichnet, dass**
das Rahmenrohr (3) das Antriebsaggregat (2) wenigstens einmal vollumfänglich umgibt und der das Antriebsaggregat (2) vollumfänglich umgebende Teil des Rahmenrohrs (3) in einer Ebene liegt, so dass ein Startpunkt (9) des Umfangs und ein Endpunkt (10) des Umfangs zusammenfallen und der den Umfang beginnende Teil des Rahmenrohrs (3) an dieser Stelle mit dem den Umfang endenden Teil des Rahmenrohrs (3) verbunden ist.

2. Befestigungsrahmen nach Anspruch 1,
**dadurch gekennzeichnet, dass**
in dem Rahmenrohr (3) wenigstens ein von dem Abgas durchströmter Schalldämpfer (6) integriert ist.

3. Befestigungsrahmen nach einem der vorhergehenden Ansprüche,
**dadurch gekennzeichnet, dass**
an dem Rahmenrohr (3) wenigstens drei Rahmenbefestigungslager (7) zur Befestigung des Rahmenrohrs (3) am Fahrzeugaufbau vorgesehen sind.

4. Befestigungsrahmen nach einem der vorhergehenden Ansprüche,
**dadurch gekennzeichnet, dass**
an dem Rahmenrohr (3) wenigstens ein Aggregatbefestigungslager (11) zur Befestigung des Antriebsaggregats (2) am Rahmenrohr (3) vorgesehen ist.

5. Befestigungsrahmen nach einem der vorhergehenden Ansprüche,
**dadurch gekennzeichnet, dass**
das Antriebsaggregat (2) eine Brennstoffzelle ist.

## Claims

1. Fastening frame for fastening a drive unit (2) which produces an exhaust gas to a body of a vehicle, wherein a frame tube (3) which supports the drive unit (2), is connected at one end in a fluid-conducting manner to an exhaust gas outlet (4) of the drive unit (2), and is set up to conduct the exhaust gas through the frame tube (3) away from the drive unit (2), **characterized in that** the frame tube (3) surrounds the drive unit (2) at least once around the full circumference, and that part of the frame tube (3) which surrounds the drive unit (2) around the full circumference lies in one plane, with the result that a start point (9) of the circumference and an end point (10) of the circumference coincide, and that part of the frame tube (3) which starts the circumference is connected at the said point to that part of the frame tube (3) which ends the circumference.

2. Fastening frame according to Claim 1, **characterized in that** at least one silencer (6), through which the exhaust gas flows, is integrated into the frame tube (3).

3. Fastening frame according to either of the preceding claims, **characterized in that** at least three frame fastening bearings (7) are provided on the frame tube (3) for fastening the frame tube (3) to the vehicle body.

4. Fastening frame according to one of the preceding claims, **characterized in that** at least one unit fastening bearing (11) is provided on the frame tube (3) for fastening the drive unit (2) to the frame tube (3).

5. Fastening frame according to one of the preceding claims, **characterized in that** the drive unit (2) is a fuel cell.

## Revendications

1. Cadre de fixation pour la fixation d'un groupe motopropulseur (2) générant un gaz d'échappement à une carrosserie d'un véhicule, dans lequel un tube de cadre (3) portant le groupe motopropulseur (2), qui est connecté fluidiquement par une extrémité à une sortie de gaz d'échappement (4) du groupe motopropulseur (2) et qui est prévu pour guider le gaz d'échappement à travers le tube de cadre (3) à l'écart du groupe motopropulseur (2),
**caractérisé en ce que**
le tube de cadre (3) entoure au moins une fois sur toute sa périphérie le groupe motopropulseur (2) et la partie du tube de cadre (3) entourant sur toute sa périphérie le groupe motopropulseur (2) est située dans un plan de telle sorte qu'un point de départ (9) de la périphérie et un point final (10) de la périphérie coïncident et la partie du tube de cadre (3) au début de la périphérie est connectée à cet endroit à la partie du tube de cadre (3) à la fin de la périphérie.

2. Cadre de fixation selon la revendication 1,
**caractérisé en ce**
**qu'**au moins un silencieux (6) parcouru par le gaz d'échappement est intégré dans le tube de cadre (3) .

3. Cadre de fixation selon l'une quelconque des revendications précédentes,
**caractérisé en ce**
**qu'**au moins trois paliers de fixation de cadre (7) sont prévus sur le tube de cadre (3) pour la fixation du tube de cadre (3) à la carrosserie du véhicule.

4. Cadre de fixation selon l'une quelconque des revendications précédentes,
**caractérisé en ce**
**qu'**au moins un palier de fixation de groupe (11) est prévu sur le tube de cadre (3) pour la fixation du groupe motopropulseur (2) sur le tube de cadre (3).

5. Cadre de fixation selon l'une quelconque des revendications précédentes,
**caractérisé en ce que**
le groupe motopropulseur (2) est une pile à combustible.
